(19) Europäisches Patentamt
European Patent Office
Office européen des brevets

(11) EP 1 519 981 B1

(12) # EUROPÄISCHE PATENTSCHRIFT

(45) Veröffentlichungstag und Bekanntmachung des Hinweises auf die Patenterteilung:
**28.06.2006 Patentblatt 2006/26**

(21) Anmeldenummer: **03740253.4**

(22) Anmeldetag: **14.06.2003**

(51) Int Cl.:
***C08J 5/00*** *(2006.01)* ***C08J 5/22*** *(2006.01)*
***H01M 8/10*** *(2006.01)* ***H01M 4/00*** *(2006.01)*
***C08G 73/00*** *(2006.01)*

(86) Internationale Anmeldenummer:
**PCT/EP2003/006308**

(87) Internationale Veröffentlichungsnummer:
**WO 2004/003061 (08.01.2004 Gazette 2004/02)**

(54) **PROTONENLEITENDE MEMBRAN UND DEREN VERWENDUNG**
PROTON-CONDUCTING MEMBRANE AND THE USE THEREOF
MEMBRANE CONDUCTRICE DE PROTONS ET SON UTILISATION

(84) Benannte Vertragsstaaten:
**AT BE BG CH CY CZ DE DK EE ES FI FR GB GR HU IE IT LI LU MC NL PT RO SE SI SK TR**

(30) Priorität: **27.06.2002 DE 10228657**

(43) Veröffentlichungstag der Anmeldung:
**06.04.2005 Patentblatt 2005/14**

(73) Patentinhaber: **Pemeas GmbH**
**65926 Frankfurt am Main (DE)**

(72) Erfinder:
- **CALUNDANN, Gordon**
  **North Plainfield, NJ 07060 (US)**
- **SANSONE, Michael, J.**
  **Berkeley Heights, NJ 07927 (US)**
- **UENSAL, Oemer**
  **55128 Mainz (DE)**
- **KIEFER, Joachim**
  **66679 Losheim am See (DE)**

(74) Vertreter: **Luderschmidt, Schüler & Partner GbR**
**Patentanwälte,**
**Industriepark Höchst,**
**Geb. F821**
**65926 Frankfurt am Main (DE)**

(56) Entgegenhaltungen:
**US-A- 3 313 783** **US-A- 5 218 076**
**US-A- 5 525 436**

- **OSAHENI J A ET AL: "SYNTHESIS AND PROCESSING OF HETEROCYCLIC POLYMERS AS ELECTRONIC, OPTOELECTRONIC, AND NONLINEAR OPTICAL MATERIALS. 4 NEW CONJUGATED RIGID-ROD POLY(BENZOBIS (IMIDAZOLE)S" MACROMOLECULES, AMERICAN CHEMICAL SOCIETY. EASTON, US, Bd. 28, Nr. 4, 13. Februar 1995 (1995-02-13), Seiten 1172-1179, XP000490475 ISSN: 0024-9297**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 519 981 B1

**Beschreibung**

Die vorliegende Erfindung betrifft eine neuartige protonenleitende Polymermembran auf Basis von sulfonsäuregruppenhaltigen aromatischen Polyazolen bei denen die Sulfonsäuregruppen kovalent an den aromatischen Ring des Polymers gebunden sind und die aufgrund ihrer hervorragenden chemischen und thermischen Eigenschaften vielfältig eingesetzt werden können. Derartige Materialien eignen sich insbesondere zur Herstellung von Polymer-Elektrolyt-Membran (PEM) in sogenannten PEM-Brennstoffzellen eignet.

Polymerelektrolytmembran-Brenstoffzellen (PEMBZ) basieren auf einer protonenleitenden Polymermembran als Elektrolyten, die Polymerelektrolytmembran. Eine Brennstoffzelle setzt sich dabei aus einer Vielzahl einzelner in Reihe geschalteter Membran-Elektroden-Einheiten (MEE). Diese MEE besteht dabei aus der PEM die beidseitig mit Elektroden beschichtet sind, wobei die Grenzfläche zwischen Membran und Elektroden mit einem Edelmetallkatalysator, meist Platin, beladen ist. An diesem Katalysator findet an der sogenannten Drei-Phasen-Grenzfläche (Brennstoffgas-Katalysator-Polymerelektrolyt) die elektrochemische Reaktion der Brennstoffe statt. Als Brennstoffe werden an der Anode wasserstoffreiche Brennstoffe, wie Wasserstoff, Methanol oder Erdgas eingesetzt. Der gegenüberliegenden Kathodenseite wird sauerstoffreiches Gas, meist Luft, zugeführt. Dabei wird die chemische Energie der Brennstoffe direkt in elektrische Energie und Wärme umgewandelt. Als Reaktionsprodukt entsteht dabei Wasser. In dieser Konfiguration erfüllt die PEM wesentliche Funktionen. So muss sie als Separator eine geringe Permeabilität für die beiden Brennstoffe besitzen, als Elektrolyt eine hohe Protonenleitfähigkeit aufweisen und zugleich eine hohe mechanische, chemische und thermische Stabilität besitzen um einen dauerhaften Einsatz bei Temperaturen bis 200°C in einem stark sauren Medium versagensfrei zu gewährleisten. Deshalb ist die Zelleistung und -stabilität sehr eng mit der Membranqualität verknüpft.

Als Elektrolyt für die Brennstoffzelle kommen Feststoffe wie Polymerelektrolytmembranen, keramische Oxide, geschmolzene Karbonate oder Flüssigkeiten wie Phosphorsäure oder Kalilauge zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymerelektrolytmembranen unterscheiden.

Zu der ersten Kategorie gehören Kationenaustauschermembranen bestehend aus einem Polymergerüst welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlen-wasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylgruppe gebundenen Sulfonsäuregruppe.

Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, beispielsweise ein Polyazol, mit einer starken Säure, wie Phosphorsäure, Schwefelsäure usw., behandelt wird.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure oder Diphenyl-isophthalsäure bzw. deren Estern in der Schmelze. Das enstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in einem weiteren Schritt in polaren, aprotischen Lösemitteln wie beispielsweise Dimethylacetamid (DMAc) gelöst und eine Folie mittels klassischer Verfahren erzeugt.

In einem weiteren Schritt wird die Folie aus basischem Polymer oder Polymerblend mit einer starken Säure, vorzugsweise einer Mineralsäure, imprägniert bzw. dotiert. Hierzu wird die Folie aus basischem Polymer oder Polymerblend in eine starke Säure, vorzugsweise Phosphorsäure, eingetaucht, so daß die Folie mit der starken Säure imprägniert wird und zur protonenleitenden Membran wird.

In J. Electrochem. Soc., Band 142, Nr. 7, 1995, S. L121-L123 wird eine solche Dotierung eines Polybenzimidazols in Phosphorsäure beschrieben.

Protonenleitende, d.h. mit Säure dotierte Polyazol-Membranen für den Einsatz in PEM-Brennstoffzellen sind demzufolge bereits bekannt. Die dotierten, basischen Polyazol-Folien wirken dann als Protonenleiter und Separatoren

in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid (DMAc), der mittels bekannter Trocknungsmethoden nicht vollständig entfernt werden kann. In der deutschen Patentanmeldung Nr. 10109829.4 wird eine Polymermembran auf Basis von Polyazolen beschrieben, bei der die DMAc-Kontamination beseitigt wurde. Derartige Polymermembran zeigen zwar verbesserte mechanische Eigenschaften, hinsichtlich der spezifischen Leitfähigkeit werden jedoch 0,1 S/cm (bei 140°C) nicht überschritten.

Wesentliche Vorteile einer solchen mit Phosphorsäure dotierten Membran ist die Tatsache, dass dieses System bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. "Grotthus Mechanismus" transportieren zu können (K.-D. Kreuer, Chem. Mater. 1996, 8, 610-641). Ein solcher wasserfreier Transportmechanismus ist insbesondere interessant für die Anwendung in einer Direktmethanol-Brennstoffzelle. Dabei wird als Brennstoff Methanol verwendet, welches, ohne die Notwendigkeit eines vorgeschalteten Reformierungsschrittes, direkt oxidiert werden kann. Durch die Möglichkeit des wasserfreien Protonentransportes wird dabei Methanol nicht wie beim sogenannten "Vehicle" Mechanismus üblich in einer Hydrathülle mit dem wandernden Proton mitgeschleppt (K.-D. Kreuer, Chem. Mater. 1996, 8, 610-641).. Durch Verringerung dieses sogenannten Methanol-"Crossover" kann die Leistung und Effizienz einer Direktmethanol-Brennstoffzelle verbessert werden.

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert und die katalytische Aktivität verbessert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Neben oben erwähnten säuredotierten Polymermembranen hergestellt mittels prozessintensiver Verfahren kann eine Polymerelektrolytmembran bestehend aus einem basischen Polymer auch direkt aus Polyphosphorsäure hergestellt werden. Dazu können wahlweise die Ausgangsmonomere wie in der deutschen Patentanmeldung Nr. 10117686.4 oder die Präpolymere wie in der deutschen Patentanmeldung Nr. 10144815.5 oder das nichtschmelzende Ausgangspolymer wie in der deutschen Patentanmeldung Nr. 10117687.2 beschrieben, in Polyphosphorsäure gelöst und anschliessend direkt als protonenleitende Membran gerakelt werden ohne dass eine nachträgliche Behandlung wie Trocknung, Waschen und Dotierung erforderlich ist. Vorteile dieser Methode ist im Wesentlichen ein Prozessvereinfachung. Daneben können weiterhin neuartige Polymerelektrolytmembran durch gezielte Auswahl der Monomere massgeschneidert hergestellt werden.

Neben den vorstehend genannten Materialien sind auch entsprechende Verfahren zur Sulfonierung von Polymeren aus dem Stand der Technik bekannt.

Zur Herstellung von PEM aus sulfoniertem Polyetherketonen (PEK) wird das PEK-Polymer zunächst in einem geeigneten Lösemittel, wie z.B. konzentrierte Schwefelsäure gelöst, und dann ein agressives Sulfonierungsmittel wie Oleum oder Chlorsulfonsäure zugegeben. Dieses sulfonierte Polymer wird in einem weiteren Prozessschritt von der Sulfonierungslösung getrennt. Zur weiteren Verarbeitung muss es dann in einem weiteren Schritt mit einer basischen Lösung in die neutrale Salzform überführt werden. Anschliessend wird das Polymer wieder in Lösung gebracht und in einem weiteren Prozesschritt ein Polymerfilm durch Filmgiessen oder Rakeln hergestellt. Das Lösemittel, bevorzugt N-Methyl-Pyrrolidon oder N-Dimethylacetamid, wird dabei durch Trocknung verdampft. Der Film muss dann wieder mit Säure behandelt und

anschliessend neutral gewaschen werden. Alternativ kann ein vorher mittels Extrusion oder Filmgiessen hergestellter und anschliessend durch Strahlenpropfen modifizierter Polymerfilm, z.B. styrolmodifizierte, teilfluorierte Membran, in eine Sulfonierungslösung bestehend aus Chlorsulfonsäure und einem wasserfreien Lösemittel, z.B. Tetrachlorethan, behandelt werden (EP-A-667983, DE-A-19844645).

Bei diesen Sulfonierungsverfahren unter dem Einsatz sehr starker Sulfonierungsagenzien findet eine unkontrollierte Sulfonierung an einer Vielzahl an Stellen des Polymers statt. Die Sulfonierung kann auch zu Kettenbruch und somit zu einer Verschlechterung der mechanischen Eigenschaften und schliesslich zum vorzeitigen Versagen der Brennstoffzelle führen.

Auch Sulfonierte Polybenzimidazole sind bereits aus der Literatur bekannt.

So beschreibt US-A-4634530) eine Sulfonierung einer undotierten Polybenzimidazol-Folie mit einem Sulfonierungsmittel wie Schwefelsäure oder Oleum im Temperaturbereich bis 100°C.

Des weiteren haben Staiti et al (P. Staiti in J. Membr. Sci. 188 (2001) 71) die Herstellung und Eigenschaften von sulfoniertem Polybenzimidazole beschrieben.

Dazu war es nicht möglich die Sulfonierung an dem Polymer in der Lösung vorzunehmen. Bei Zugabe des Sulfonierungsmittels zu der PBI/DMAc Lösung fällt das Polymer aus. Zur Sulfonierung wurde zunächst ein PBI-Film hergestellt und dieser in eine verdünnte Schwefelsäure getaucht. Zur Sulfonierung wurden die Proben dann bei Temperaturen von ca. 475°C während 2 Minuten behandelt. Die sulfonierten PBI Membranen besitzen nur eine maximale Leitfähigkeit von $7{,}5*10^{-5}$ S/cm bei einer Temperatur von 160°C. Die maximale Ionenaustauschkapazität beträgt 0,12 meq/g. Es wurde ebenfalls gezeigt, dass solchermassen sulfonierte PBI Membranen nicht für den Einsatz in einer Brennstoffzelle geeignet sind.

Die Herstellung von sulfoalkylierten PBI Membranen durch die Umsetzung eines hydroxyethyl-modifizierten PBI mit einem Sulton ist in US-A-4997892 beschrieben. Basierend auf dieser Technologie können sulfopropylierte PBI Membranen hergestelltten werden (Sanui et al in Polym. Adv. Techn. 11 (2000) 544). Die Protonenleitfähigkeit solcher Membranen liegt bei $10^{-3}$ S/Cm und ist somit für Anwendungen in Brennstoffzellen, bei denen 0,1 S/cm angestrebt sind, zu niedrig.

Aufgabe dieser Erfindung ist es eine sulfonierte, hochtemperaturstabile Polymermembran mit hoher Leitfähigkeit auch bei hohen Betriebstemperaturen zur Verfügung zu stellen. Gelöst wird diese Aufgabe durch die Bereitstellung einer Polymerelektrolytmembran bestehend aus sulfonierten und mit Phosphorsäure dotierten Polyazolen. Die Sulfonierung des Polyazolen erfolgt dabei durch Zugabe eines geeigneten Sulfonierungsmittels während oder unmittelbar im Anschluss an die Polymerisation des Polyazolen.

Protonenleitende Polymermembran auf Basis von sulfonierten Polymeren auf Basis von Polymeren enthaltend wiederkehrende Benzimidazoleinheiten erhältlich durch ein Verfahren umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure/Sulfonierungsmittel-Mischung unter Ausbildung einer Lösung und/oder Dispersion

B) Aufbringen einer Schicht unter Verwendung der Mischung gemäß Schritt A) auf einem Träger oder auf einer Elektrode,

C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren

D) Behandlung der gemäß Schritt C) erzeugten Polymerschicht in Gegenwart von Feuchtigkeit bei Temperaturen und für eine Zeitdauer bis die Membran selbsttragend ist und ohne Beschädigung vom Träger abgelöst werden kann. erden kann.

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bei den in Schritt A) verwendeten aromatischen Carbonsäuren handelt es sich insbesondere um Di-carbonsäuren, Tri-carbonsäuren und Tetra-Carbonsäuren bzw. deren Estern oder deren Anhydride.

Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride. Bei den aromatischen Tri-, tetracarbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzoltricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den erfindungsgemäß eingesetzten heteroaromatischen Carbonsäuren handelt es sich um heteroaromatischen Dicarbonsäuren und Tri-carbonsäuren und Tetra-Carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0.1 und 20 Mol %, insbesondere 0,5 und 10 Mol-%.

Bevorzugt werden in Schritt A) Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Bei den erfindungsgemäß eingesetzten aromatischen und heteroaromatischen Diaminocarbonsäuren handelt es sich bevorzugt um Diaminobenzoesäure und deren Mono und Dihydrochloridderivate.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung der Monomeren kann auch eine Dispersion/Suspension erzeugt werden.

Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.

Bei dem in Schritt A) verwendeten Sulfonierungsmittel kann i) konzentrierte Schwefelsäure (>95%), ii) Chlorsulfonsäure, iii) ein Komplex aus $SO_3$ mit einer Lewis Base oder anderen organischen Bestandteilen, iv) ein Acyl oder Alkylsulfat, v) eine organische Sulfonsäure oder vi) Mischungen von i bis v verwendet werden.

Die Menge des eingesetzten Sulfonierungsmittels beträgt dabei 1 bis 20 Gewichtsprozent bezogen auf die Polyphosphorsäure, bevorzugt 2 bis 15 Gew% und ganz besonders bevorzugt 5-10 Gew%.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 und 4000 $\mu$m, vorzugsweise zwischen 30 und 1500 $\mu$m, insbesondere zwischen 50 und 500 $\mu$m.

Das in Schritt C) gebildete Polymere Azoleinheiten der allgemeinen Form auf Basis von Polymeren enthaltend wiederkehrende Benzimidazoleinheiten der allgemeinen Formel (I) und/oder (II) und/oder (III) und/oder (IV) und/oder

(V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

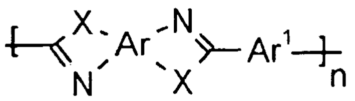

(I)

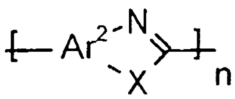

(II)

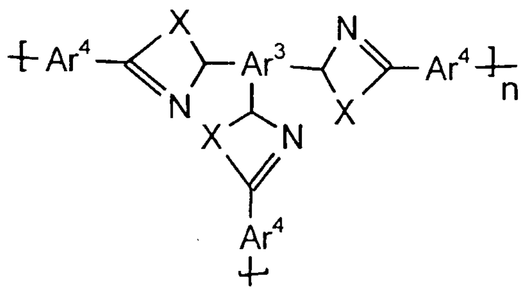

(III)

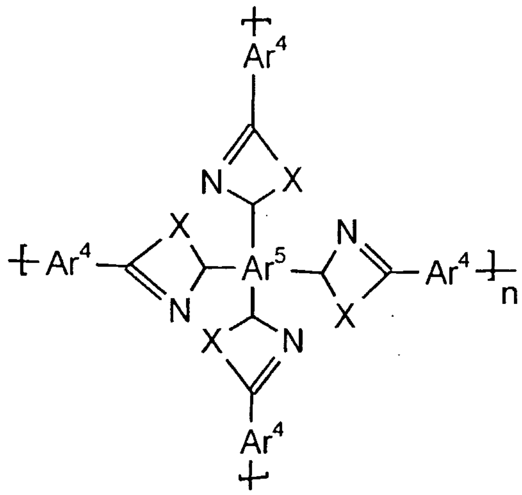

(IV)

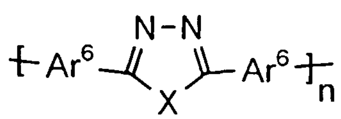

(V)

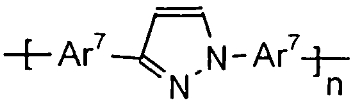

(VI)

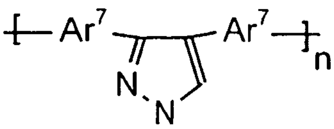

(VII)

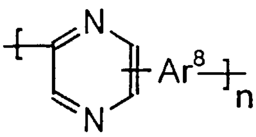

(VIII)

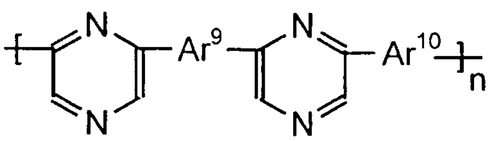

(IX)

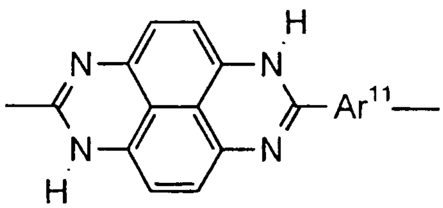

(X)

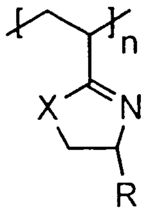

(XI)

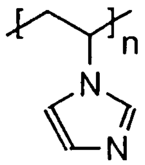

(XII)

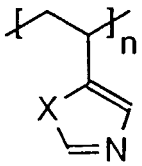

(XIII)

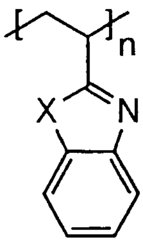

(XIV)

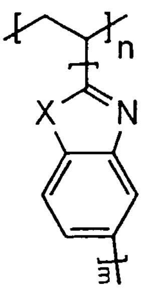

(XV)

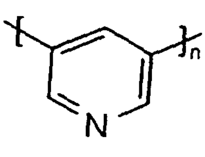

(XVI)

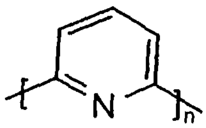

(XVII)

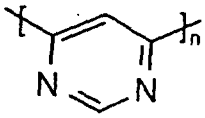

(XVIII)

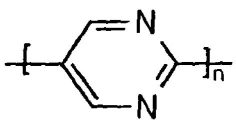

(XIX)

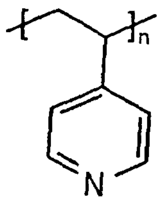

(XXI)

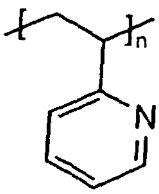

(XXII)

worin

Ar gleich oder verschieden sind und für eine vierbindige aromatische oder heteroaromatische Gruppe, die ein- oder mehrkernig sein kann,

$Ar^1$ gleich oder verschieden sind und für eine zweibindige aromatische oder heteroaromatische Gruppe, die ein- oder mehrkernig sein kann,

$Ar^2$ gleich oder verschieden sind und für eine zwei oder dreibindige aromatische oder heteroaromatische Gruppe, die ein- oder mehrkernig sein kann,

$Ar^3$ gleich oder verschieden sind und für eine dreibindige aromatische oder heteroaromatische Gruppe, die ein- oder mehrkernig sein kann,

Ar4 gleich oder verschieden sind und für eine dreibindige aromatische oder heteroaromatische Gruppe, die ein- oder mehrkernig sein kann,

Ar5 gleich oder verschieden sind und für eine vierbindige aromatische oder heteroaromatische Gruppe, die ein- oder mehrkernig sein kann,

Ar6 gleich oder verschieden sind und für eine zweibindige aromatische oder heteroaromatische Gruppe, die ein- oder mehrkernig sein kann,

Ar7 gleich oder verschieden sind und für eine zweibindige aromatische oder heteroaromatische Gruppe, die ein- oder mehrkernig sein kann,

Ar8 gleich oder verschieden sind und für eine dreibindige aromatische oder heteroaromatische Gruppe, die ein- oder mehrkernig sein kann,

Ar9 gleich oder verschieden sind und für eine zwei- oder drei- oder vierbindige aromatische oder heteroaromatische Gruppe, die ein- oder mehrkernig sein kann,

Ar10 gleich oder verschieden sind und für eine zwei- oder dreibindige aromatische oder heteroaromatische Gruppe, die ein- oder mehrkernig sein kann,

Ar11 gleich oder verschieden sind und für eine zweibindige aromatische oder heteroaromatische Gruppe, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R gleich oder verschieden für Wasserstoff, eine Alkylgruppe und eine aromatische Gruppe steht und

n, m eine ganze Zahl größer gleich 10, bevorzugt größer gleich 100, ist,

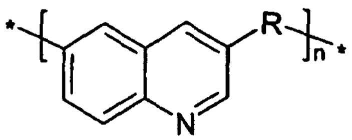

(XX)

worin

R gleich oder verschieden für eine Alkylgruppe und eine aromatische Gruppe steht und

n eine ganze Zahl größer gleich 10, bevorzugt größer gleich 100 ist, gebildet wird,

und das einen Gehalt an Schwefel von 2 bis 20 Gew% (bestimmt mittel Elemantaranalyse), aufweist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (1) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

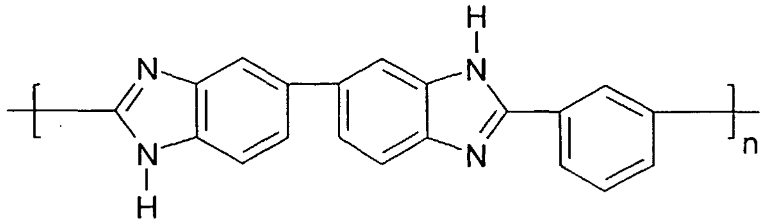

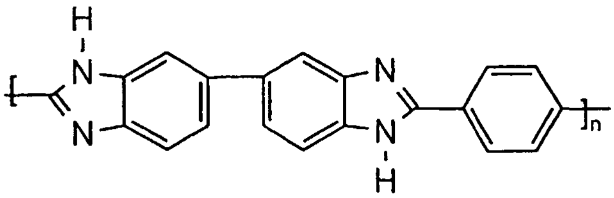

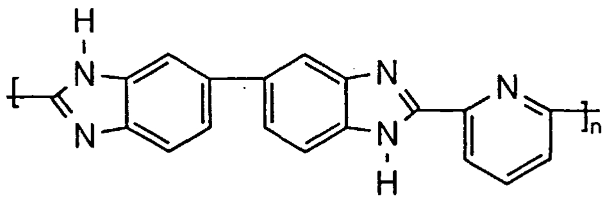

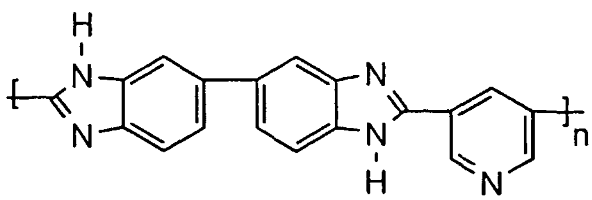

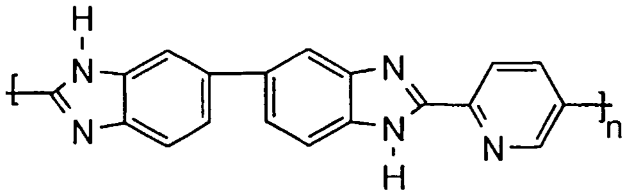

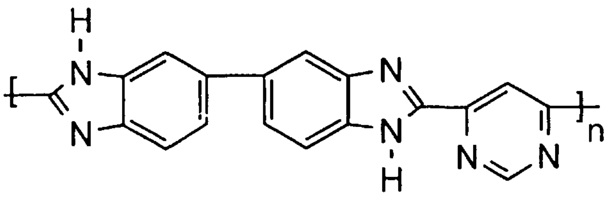

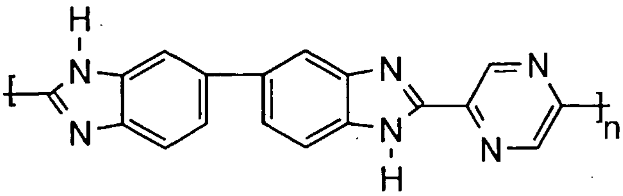

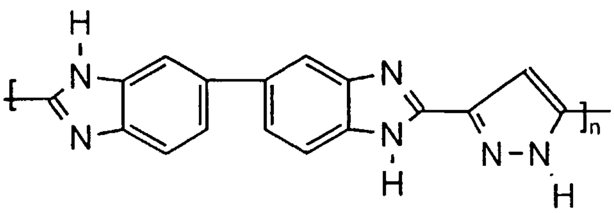

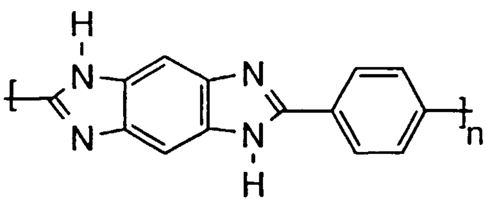

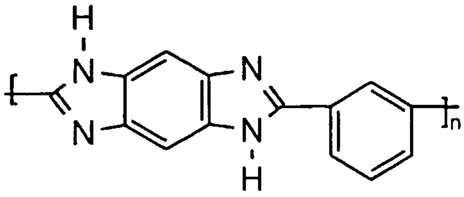

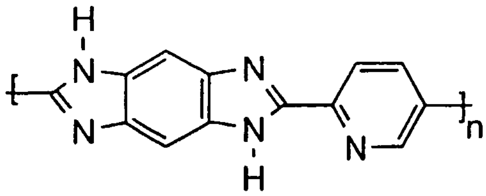

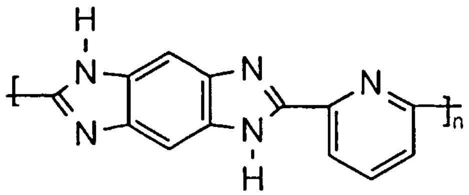

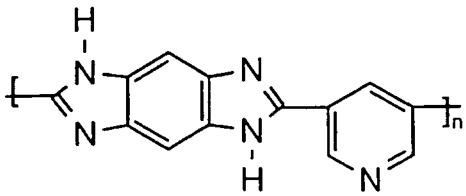

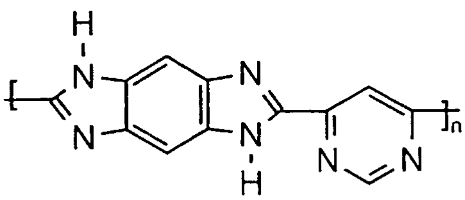

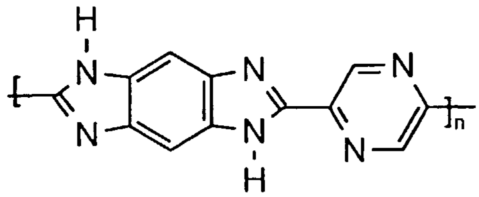

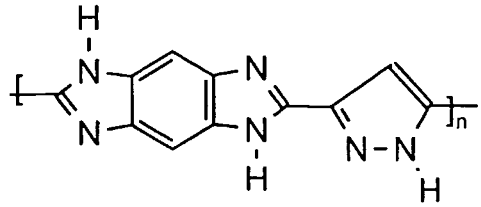

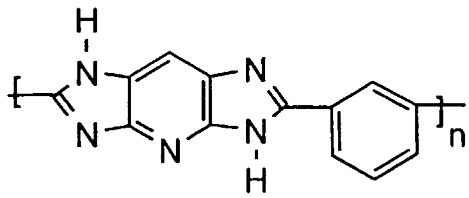

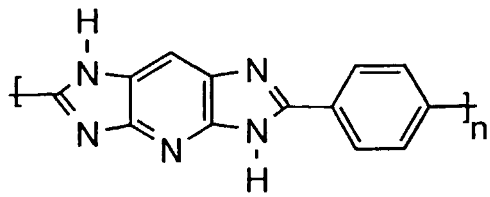

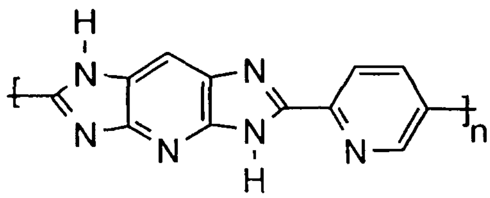

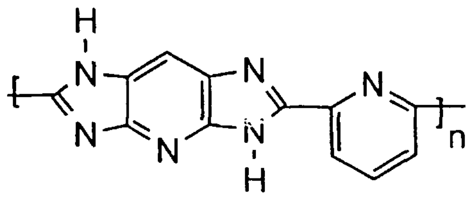

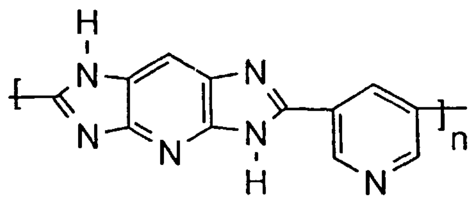

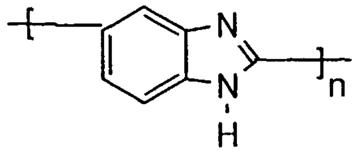

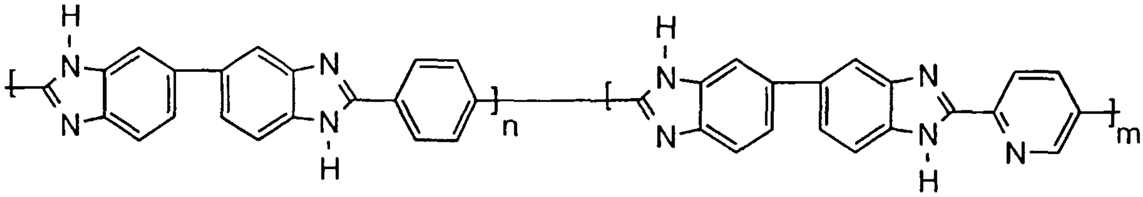

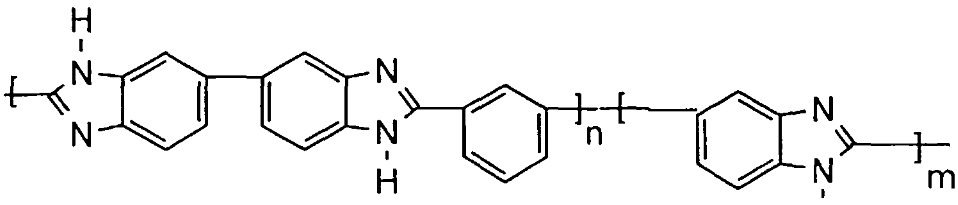

wobei n und m eine ganze Zahl größer gleich 10, vorzugsweise größer gleich 100 ist.

Die mittel des beschriebenen Verfahrens erhältlichen Polyazole, insbesondere jedoch die Polybenzimidazole zeichnen sich durch ein hohes Molekulargewicht aus.

Gemessen als Intrinsische Viskosität beträgt diese mindestens 1,4 dl/g und liegt somit deutlich über dem von handelsüblichem Polybenzimidazol (IV < 1,1 dl/g).

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen

Eigenschaft bei.

Behandlung der gemäß Schritt C) erzeugten Polymerschicht in Gegenwart von Feuchtigkeit bei Temperaturen und für eine Dauer ausreichend bis die Schicht eine ausreichende Festigkeit für den Einsatz in Brennstoffzellen besitzt. Die Behandlung kann soweit erfolgen, daß die Membran selbsttragend ist, so daß sie ohne Beschädigung vom Träger abgelöst werden kann.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Es hat sich weiterhin gezeigt, daß bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure. die Temperatur in Schritt C) - oder falls die Bildung von Oligomeren und/oder Polymeren bereits in Schritt A) gewünscht wird - im Bereich von bis zu 300°C, vorzugsweise zwischen 100°C und 250°C, günstig ist.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 μm, vorzugsweise zwischen 20 und 2000 μm, insbesondere zwischen 20 und 1500 μm, die selbsttragend ist. Die in der Polylphosphorsäureschicht gemäß Schritt B) vorliegenden intra- und intermolekularen Strukturen führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die Behandlung mit Wasser gemäss Schritt D) kann auch so weit erfolgen, dass die Phosphorsäure vollständig aus der Membran entfernt wird.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 25, insbesondere zwischen 12 und 20, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluß an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr

als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit bei Temperaturen unterhalb und oberhalb 100°C ohne eine Membranbefeuchtung. Die spezifische Leitfähigkeit beträgt sowohl bei Raumtemperatur als auch bei 120°C mindestens 0,06 S/cm, vorzugsweise mindestens 0,08 S/cm, insbesondere mindestens 0,09 S/cm.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder bei Schritt A erfolgen oder nach der Polymerisation Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$ , $HTaWO_6$, $HNbO_3$, $HTiNbO_5$, $HTiTaO_5$, $HSbTeO_6$, $H_STi_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2- 10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.) Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.
Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran bzw. beschichtete Elektrode ist Gegenstand der vorliegenden Erfindung.

Die Polymerisation/Bildung der Oligomere kann auch im Schritt A) erfolgen und die Lösung auf die Elektrode gerakelt werden. Dann kann auf Schritt C) teilweise oder ganz verzichtet werden.

Die vorstehend beschriebenen Varianten und bevorzugten Ausführungsformen sind auch für diesen Gegenstand gültig, so daß an dieser Stelle auf deren Wiederholung verzichtet wird.

Die Beschichtung hat nach Schritt D) eine Dicke zwischen 2 und 3000 µm, vorzugsweise zwischen 3 und 2000 µm, insbesondere zwischen 5 und 1500 µm hat.

Eine derartig beschichtete Elektrode kann in einer Membran-Elektroden-Einheit, die gegebenenfalls mindestens eine erfindungsgemäße Polymermembran aufweist, eingebaut werden.

Allgemeine Messmethoden:

Messmethode für IEC

Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazität wird dann aus dem Verbrauch der 0, 1 M NaOH bis zum ersten Titrationsendpunkt, $V_1$ in ml, und dem Trockengewicht, $m_0$ in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-1 00 Thermoelement geregelt. Nach Erreichen der Temperatur wird die Probe vor dem Start der Messung 10 Minuten auf dieser Temperatur gehalten

**Beispiele:**

**Vorratslösung für die Herstellung von in situ sulfonierten PBI-Membranen**

Zu einer Mischung aus 26,948 g Isophthalsäure und 34,74 g 3,3',4,4'-Tetraaminobiphenyl in 1,5 l Kolben, welcher mit Stickstoffeinfuhr und -ausfuhr und einem mechanischen Rührer ausgestattet ist, wurde 938,6 g Polyphosphorsäure (83,4 ± 0,5% $P_2O_5$) zugegeben. Diese Mischung wurde bei 120°C 2 h bei 150°C 3h und bei180°C 2h lang erhöht. Dann wurde die Reaktionslösung bei 220°C erhizt und 14 h lang gerührt. Die resultierende 5%-ige PBI-Lösung in PPA wurde auf die RT abgekühlt und wurde für die Herstellung folgenden sulfonierten PBI-Membranen verwendet

Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 16h lang bei 0,001 bar getrocknet. Aus einer 0,4 %-ige PBI-Lösung in 100 ml 96%-igen $H_2SO_4$ wurde für die inhärente Viskosität $\eta_{inh}$: 1,52

dL/g erhalten.

**Probe 1: (PPA/1sPBI-Membran)**

Zu einer 100 g der oben beschriebenen 5%-igen PBI-Vorratslösung in 113,6% PPA wurde 22,34 g 85%-ige Phosphorsäure und 1,66 g 96%-ige Schwefelsäure bei 220°C innerhalb 30 Min. gegeben. Die Lösung wurde für weitere 4 h bei 220°C gerührt. Die resultierende sulfonierte PBI-Lösung in PPA wurde bei 220°C mit einem vorgeheizten Rakelgerät (381 µm) auf einer Glasplatte gerakelt. Eine transparente Membran wurde erhalten. Die Membran wurde dann 1d lang bei RT stehengelassen, damit eine selbstragende Membran entstand.

**Probe 2: (PPA/2sPBI-Membran)**

Zu einer 100 g der oben beschriebenen 5%-igen PBI-Vorratslösung in 113,6% PPA wurde 17,24 g 85%-ige Phosphorsäure und 3,314 g 96%-ige Schwefelsäure bei 220°C innerhalb 30 Min. gegeben. Die Lösung wurde für weitere 4 h bei 220°C gerührt. Die resultierende sulfonierte PBI-Lösung in PPA wurde bei 220°C mit einem vorgeheizten Rakelgerät (381 µm) auf einer Glasplatte gerakelt. Eine transparente Membran wurde erhalten. Die Membran wurde dann 1d bei RT stehengelassen.

**Probe 3: (PPA/3sPBI-Membran)**

Zu einer 100 g der oben beschriebenen 5%-igen PBI-Vorratslösung in 113,6% PPA wurde 24,76 g 85%-ige Phosphorsäure und 4,97 g 96%-ige Schwefelsäure bei 220°C innerhalb 30 Min. gegeben. Die Lösung wurde für weitere 4 h bei 220°C gerührt. Die resultierende sulfonierte PBI-Lösung in PPA wurde bei 220°C mit einem vorgeheizten Rakelgerät (381 µm) auf einer Glasplatte gerakelt. Eine transparente Membran wurde erhalten. Die Membran wurde dann 1d bei RT stehengelassen.

**Probe 4: (PPA/4sPBI-Membran)**

Zu einer 100 g 5%-igen oben beschriebenen Vorrats-PBI-Lösung in 113,6% PPA wurde 38,89 g 85%-ige Phosphorsäure und 6,6288 g 96%-ige Schwefelsäure bei 220°C innerhalb 30 Min. gegeben. Die Lösung wurde für weitere 4 h bei 220°C gerührt. Die resultierende sulfonierte PBI-Lösung in 105,1%-ige PPA wurde bei 220°C mit einem vorgeheizten Rakelgerät (381 µm) auf einer Glasplatte gerakelt. Eine transparente Membran wurde erhalten. Die Membran wurde 1d lang bei RT stehengelassen.

**Probe 5: (PPA/6sPBI-Membran)**

Zu einer 100 g der oben beschriebenen 5%-igen PBI-Vorratslösung in 113,6% PPA wurde 41,22 g 85%-ige Phosphorsäure, 19,333 g 115-ige Polyphosphorsäure und 9,943 g 96%-ige Schwefelsäure bei 220°C innerhalb 30 Min. gegeben. Die Lösung wurde für weitere 4 h bei 220°C gerührt. Die resultierende sulfonierte PBI-Lösung in PPA wurde bei 220°C mit einem vorgeheizten Rakelgerät (381 µm) auf einer Glasplatte gerakelt. Eine transparente Membran wurde erhalten. Die Membran wurde anschliessend1d bei RT stehengelassen.

| | Dicke | IV | S-Gehalt | $SO_3H$-Gehalt | $H_3PO_4$- | IEC | IEC | bei RT | bei 120°C |
|---|---|---|---|---|---|---|---|---|---|
| Probe | [µm] | [dL/g] | [%] | [%] | Gehalt | [meq/g] | [eq/cm$^3$] | σ(S/cm) | σ(S/cm) |
| 1 | 210 | 1,14 | 4,16 | 14,4 | 14,23 | 138,56 | 2,5 | 0,092 | 0,064 |
| 2 | 231 | 1,16 | 6,22 | 21,5 | 15,71 | 153,01 | 3,21 | 0,083 | 0,082 |
| 3 | 186 | 1,1 | 8,49 | 29,4 | 20,16 | 196,36 | 3,16 | 0,099 | 0,054 |
| 4 | 184 | 1,14 | 8,95 | 30,6 | 19,78 | 192,66 | 3,14 | 0,09 | 0,089 |
| 5 | 218 | 1,14 | 9,16 | 31,7 | 23,08 | 224,76 | 3,22 | 0,096 | 0,092 |

**Patentansprüche**

1. Protonenleitende Polymermembran auf Basis von sulfonierten Polymeren auf Basis von Polymeren enthaltend wiederkehrende Benzimidazoleinheiten erhältlich durch ein Verfahren umfassend die Schritte

   A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure/Sulfonierungsmittel-Mischung unter Ausbildung einer Lösung und/oder Dispersion
   B) Aufbringen einer Schicht unter Verwendung der Mischung gemäß Schritt A) auf einem Träger oder auf einer Elektrode,
   C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren
   D) Behandlung der gemäß Schritt C) erzeugten Polymerschicht in Gegenwart von Feuchtigkeit bei Temperaturen und für eine Zeitdauer bis die Membran selbsttragend ist und ohne Beschädigung vom Träger abgelöst werden kann.

2. Membran gemäß Anspruch 1, **dadurch gekennzeichnet, daß** als aromatische Tetra-Amino-Verbindungen 3.3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan

3. Membran gemäß Anspruch 1, **dadurch gekennzeichnet, daß** als aromatische Dicarbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl) hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride eingesetzt werden.

4. Membran gemäß Anspruch 1, **dadurch gekennzeichnet, daß** als aromatische Carbonsäure Tri-carbonsäuren, Tetracarbonsäuren bzw. deren C1-C20-AlkylEster oder C5-C12-Aryl-Ester oder deren Säureanhydride oder deren Säurechloride, vorzugsweise 1,3,5-benzene-tricarboxylic acid (trimesic acid); 1,2,4-benzene-tricarboxylic acid (trimellitic acid); (2-Carboxyphenyl)iminodiessigsäure, 3,5,3'-biphenyltricarboxylic acid; 3,5,4'-biphenyltricarboxylic acid und/oder 2,4,6-pyridinetricarboxylic acid eingesetzt werden.

5. Membran gemäß Anspruch 1, **dadurch gekennzeichnet, daß** als aromatische Carbonsäure Tetracarbonsäuren deren C1-C20-Alkyl-Ester oder C5-C12-ArylEster oder deren Säureanhydride oder deren Säurechloride, vorzugsweise Benzol 1,2,4,5-tetracarbonsäuren; Naphthalin-1,4,5,8-tetracarbonsäuren 3,5,3',5'-biphenyltetracarboxylic acid; Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure eingesetzt werden.

6. Membran gemäß Anspruch 4, **dadurch gekennzeichnet, daß** der Gehalt an Tricarbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%. beträgt.

7. Membran gemäß Anspruch 1, **dadurch gekennzeichnet, daß** als heteroaromatische Carbonsäuren heteroaromatische Di-carbonsäuren und Tricarbonsäuren und Tetra-Carbonsäuren eingesetzt werden, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride.

8. Membran gemäß Anspruch 1, **dadurch gekennzeichnet, daß** das in Schritt A) verwendete Sulfonierungsmittel aus der Gruppe i) konzentrierte Schwefelsäure (>95%), ii) Chlorsulfonsäure, iii) ein Komplex aus $SO_3$ mit einer Lewis Base oder anderen organischen Bestandteilen, iv) ein Acyl oder Alkylsulfat, v) eine organische Sulfonsäure oder vi) Mischungen von i bis v ausgewählt wird.

9. Membran gemäß Anspruch 1, **dadurch gekennzeichnet, daß** als aromatische und heteroaromatische DiaminocarbonsäureDiaminobenzoesäure und deren Mono und Dihydrochloridderivate eingesetzt wird.

10. Membran gemäß Anspruch 1, **dadurch gekennzeichnet, daß** in Schritt A) eine Polyphosphorsäure mit einem Gehalt berechnet als $P_2O_5$ (acidimetrisch) von mindestens 83% eingesetzt wird.

11. Membran gemäß Anspruch 1, **dadurch gekennzeichnet, daß** in Schritt C) ein Polymer auf Basis von Polymeren enthaltend wiederkehrende Benzimidazoleinheiten der allgemeinen Formel (1) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

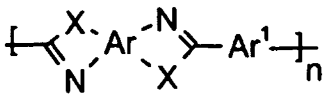

(I)

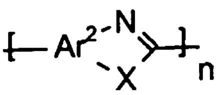

(II)

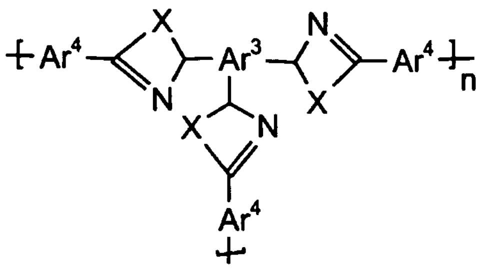

(III)

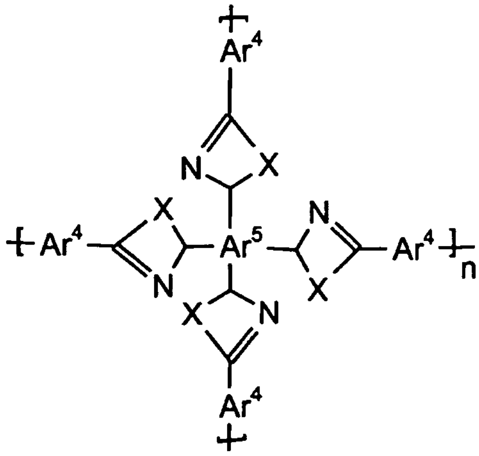

(IV)

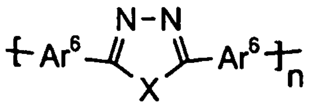

(V)

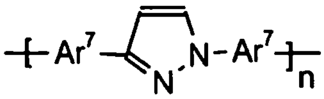

(VI)

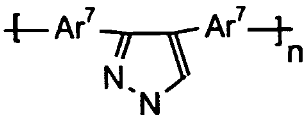

(VII)

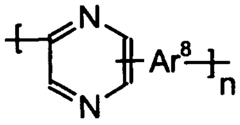

(VIII)

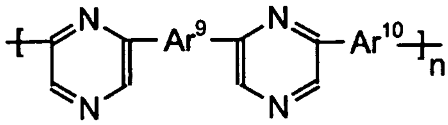

(IX)

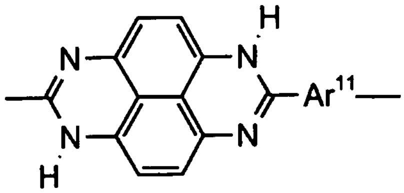

(X)

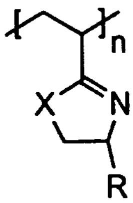

(XI)

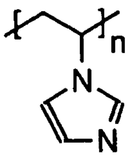

(XII)

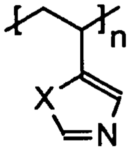

(XIII)

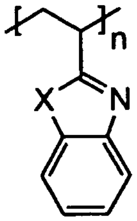

(XIV)

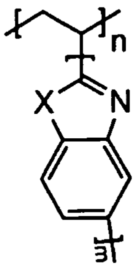

(XV)

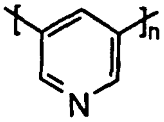

(XVI)

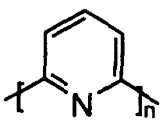

(XVII)

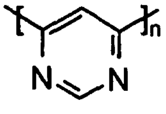

(XVIII)

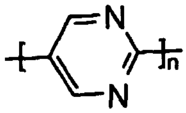

(XIX)

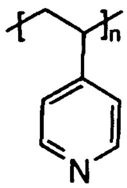

(XXI)

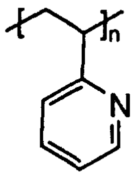

(XXII)

worin

Ar gleich oder verschieden sind und für eine vierbindige aromatische oder heteroaromatische Gruppe, die ein- oder mehrkernig sein kann,

$Ar^1$ gleich oder verschieden sind und für eine zweibindige aromatische oder heteroaromatische Gruppe, die ein- oder mehrkernig sein kann,

$Ar^2$ gleich oder verschieden sind und für eine zwei oder dreibindige aromatische oder heteroaromatische Gruppe, die ein- oder mehrkernig sein kann,

$Ar^3$ gleich oder verschieden sind und für eine dreibindige aromatische oder heteroaromatische Gruppe, die ein- oder mehrkernig sein kann,

$Ar^4$ gleich oder verschieden sind und für eine dreibindige aromatische oder heteroaromatische Gruppe, die ein- oder mehrkernig sein kann,

$Ar^5$ gleich oder verschieden sind und für eine vierbindige aromatische oder heteroaromatische Gruppe, die ein- oder mehrkernig sein kann,

$Ar^6$ gleich oder verschieden sind und für eine zweibindige aromatische oder heteroaromatische Gruppe, die ein- oder mehrkernig sein kann,

$Ar^7$ gleich oder verschieden sind und für eine zweibindige aromatische oder heteroaromatische Gruppe, die ein- oder mehrkernig sein kann,

$Ar^8$ gleich oder verschieden sind und für eine dreibindige aromatische oder heteroaromatische Gruppe, die ein- oder mehrkernig sein kann,

$Ar^9$ gleich oder verschieden sind und für eine zwei- oder drei- oder vierbindige aromatische oder heteroaromatische Gruppe, die ein- oder mehrkernig sein kann,

$Ar^{10}$ gleich oder verschieden sind und für eine zwei- oder dreibindige aromatische oder heteroaromatische Gruppe, die ein- oder mehrkernig sein kann,

$Ar^{11}$ gleich oder verschieden sind und für eine zweibindige aromatische oder heteroaromatische Gruppe, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R gleich oder verschieden für Wasserstoff, eine Alkylgruppe und eine aromatische Gruppe steht und
n, m eine ganze Zahl größer gleich 10, bevorzugt größer gleich 100 ist,

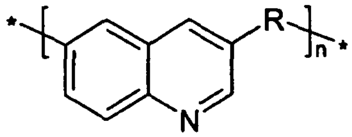

(XX)

worin

R gleich oder verschieden für eine Alkylgruppe und eine aromatische Gruppe steht und
n eine ganze Zahl größer gleich 10, bevorzugt größer gleich 100 ist, gebildet wird,

und das einen Gehalt an Schwefel von 2 bis 20 Gew% (bestimmt mittel Elemantaranalyse), aufweist.

**12.** Membran gemäß Anspruch 1, **dadurch gekennzeichnet, daß** nach Schritt A) und vor Schritt B) die Viskosität durch Zugabe von Phosphorsäure eingestellt wird.

**13.** Membran gemäß Anspruch 1, **dadurch gekennzeichnet, daß** die Behandlung der Membran in Schritt D) erfolgt bei Temperaturen oberhalb 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf erfolgt.

**14.** Membran gemäß Anspruch 1, **dadurch gekennzeichnet, daß** in Schritt B) als Träger eine Elektrode gewählt wird und die Behandlung gemäß Schritt D) dergestalt ist, daß die gebildete Membran nicht mehr selbsttragend ist.

**15.** Elektrode mit einer protonenleitenden Polymerbeschichtung auf Basis von Polymeren enthaltend wiederkehrende Benzimidazoleinheiten erhältlich durch ein Verfahren umfassend die Schritte

A) Mischen von einem oder mehreren aromatischen Tetra-Amino-Verbindungen mit einer oder mehreren aromatischen Sulfon-Carbonsäuren bzw. deren Estern, die mindestens zwei Carbonsäuregruppen und eine Sulfonsäuregruppe pro Carbonsäure-Monomer enthalten, oder Mischen von einer oder mehreren aromatischen und/oder heteroaromatischen sulfonierten Diaminocarbonsäuren in einer Polyphosphorsäure unter Ausbildung einer Lösung und/oder Dispersion
B) Aufbringen einer Schicht unter Verwendung der Mischung gemäß Schritt A) auf einem Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren .
D) Behandlung der in Schritt C) gebildeten Membran in Gegenwart von Feuchtigkeit bei Temperaturen und für eine Dauer ausreichend bis die Schicht eine ausreichende Festigkeit für den Einsatz in Brennstoffzellen besitzt.

**16.** Membran-Elektroden-Einheit enthaltend mindestens eine Elektrode und mindestens eine Membran gemäß einem oder mehreren der Ansprüche 1 bis 14.

**17.** Membran-Elektroden-Einheit enthaltend mindestens eine Elektrode gemäß Anspruch 16 und mindestens eine Membran gemäß einem oder mehreren der Ansprüche 1 bis 14.

**18.** Brennstoffzelle enthaltend eine oder mehrere Membran-Elektroden-Einheiten gemäß Anspruch 16 oder 17.

### Claims

**1.** A proton-conducting polymer membrane which is based on sulfonated polymers based on polymers comprising recurring benzimidazole units and is obtainable by a process comprising the steps

A) mixing of one or more aromatic tetraamino compounds with one or more aromatic carboxylic acids or esters

thereof which contain at least two acid groups per carboxylic acid monomer, or mixing of one or more aromatic and/or heteroaromatic diaminocarboxylic acids, in a polyphosphoric acid/sulfonating agent mixture to form a solution and/or dispersion,
B) application of a layer using the mixture from step A) to a support or an electrode,
C) heating of the sheet-like structure/layer obtainable according to step B) under inert gas at temperatures of up to 350°C, preferably up to 280°C, to form the polyazole polymer,
D) treatment of the polymer layer produced in step C) in the presence of moisture at temperatures and for a time until the membrane is self-supporting and can be detached from the support without damage.

**2.** The membrane as claimed in claim 1, **characterized in that** aromatic tetraamino compounds used are 3,3',4,4'-tetraaminobiphenyl, 2,3,5,6-tetraaminopyridine, 1,2,4,5-tetraaminobenzene, bis(3,4-diaminophenyl) sulfone, bis (3,4-diaminophenyl) ether, 3,3',4,4'-tetraaminobenzophenone, 3,3',4,4'-tetraaminodiphenylmethane and 3,3',4,4'-tetraaminodiphenyldimethylmethane.

**3.** The membrane as claimed in claim 1, **characterized in that** aromatic dicarboxylic acids used are isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, bis(4-carboxyphenyl) ether, benzophenone-4,4'-dicarboxylic acid, bis(4-dicarboxyphenyl) sulfone, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid, or their C1-C20-alkyl esters or C5-C12-aryl esters, or their acid anhydrides or acid chlorides.

**4.** The membrane as claimed in claim 1, **characterized in that** aromatic carboxylic acids used are tricarboxylic acids, tetracarboxylic acids or their C1-C20-alkyl esters or C5-C12-aryl esters or their acid anhydrides or their acid chlorides, preferably 1,3,5-benzenetricarboxylic acid (trimesic acid); 1,2,4-benzenetricarboxylic acid (trimellitic acid); (2-carboxyphenyl)iminodiacetic acid, 3,5,3'-biphenyltricarboxylic acid; 3,5,4'-biphenyltricarboxylic acid and/or 2,4,6-pyridinetricarboxylic acid.

**5.** The membrane as claimed in claim 1, **characterized in that** aromatic carboxylic acids used are tetracarboxylic acids, their C1-C20-alkyl esters or C5-C12-aryl esters or their acid anhydrides or their acid chlorides, preferably benzene-1,2,4,5-tetracarboxylic acid; naphthalene-1,4,5,8-tetracarboxylic acid, 3,5,3',5'-biphenyltetracarboxylic acid; benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid, 1,4,5,8-naphthalenetetracarboxylic acid.

**6.** The membrane as claimed in claim 4, **characterized in that** the content of tricarboxylic acids or tetracarboxylic acids (based on dicarboxylic acids used) is from 0 to 30 mol%, preferably from 0.1 to 20 mol%, in particular from 0.5 to 10 mol%.

**7.** The membrane as claimed in claim 1, **characterized in that** heteroaromatic carboxylic acids used are heteroaromatic dicarboxylic acids and tricarboxylic acids and tetracarboxylic acids in which at least one nitrogen, oxygen, sulfur or phosphorus atom is present in the aromatic, preferably pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid, and also their C1-C20-alkyl esters or C5-C12-aryl esters, or their acid anhydrides or their acid chlorides.

**8.** The membrane as claimed in claim 1, **characterized in that** the sulfonating agent used in step A) is selected from the group consisting of i) concentrated sulfuric acid (>95%), ii) chlorosulfonic acid, iii) a complex of $SO_3$ with a Lewis base or other organic constituents, iv) an acyl or alkyl sulfate, v) an organic sulfonic acid and vi) mixtures of i to v.

**9.** The membrane as claimed in claim 1, **characterized in that** aromatic and heteroaromatic diaminocarboxylic acids used are diaminobenzoic acid and its monohydrochloride and dihydrochloride derivatives.

**10.** The membrane as claimed in claim 1, **characterized in that** a polyphosphoric acid having an assay calculated as

$P_2O_5$ (acidimetric) of at least 83% is used in step A).

**11.** The membrane as claimed in claim 1, **characterized in that** a polymer which is based on polymers comprising recurring benzimidazole units of the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVI) and/or (XVII) and/or (XVIII) and/or (XIX) and/or (XX) and/or (XXI) and/or (XXII)

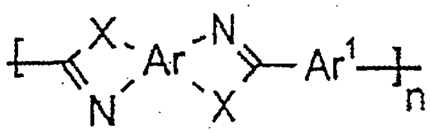

(I)

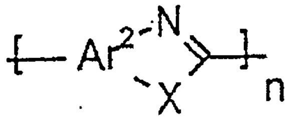

(II)

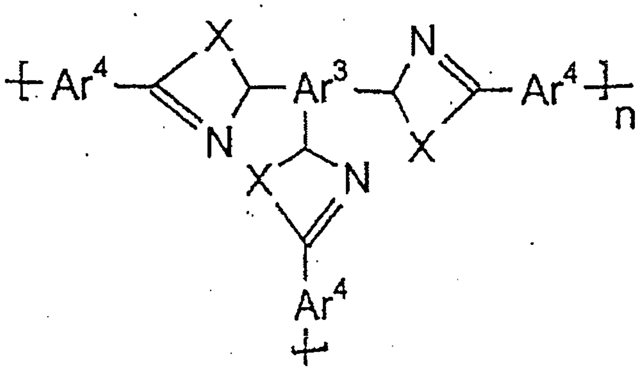

(III)

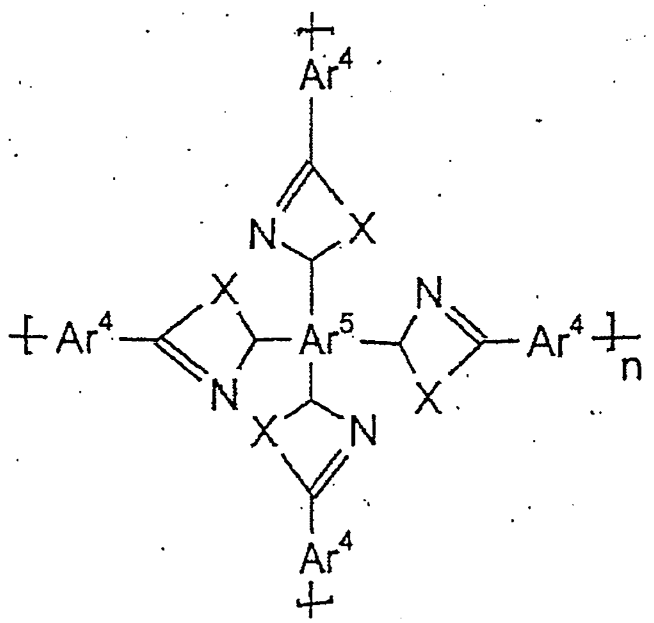

(IV)

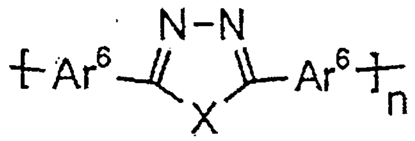

(V)

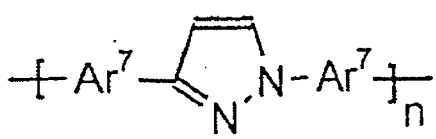

(VI)

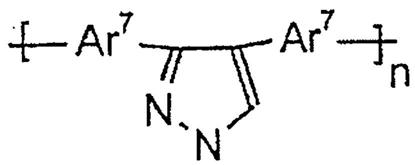

(VII)

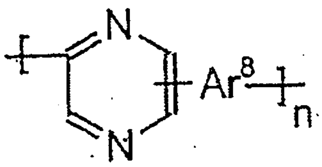

(VIII)

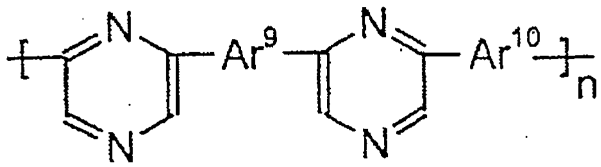

(IX)

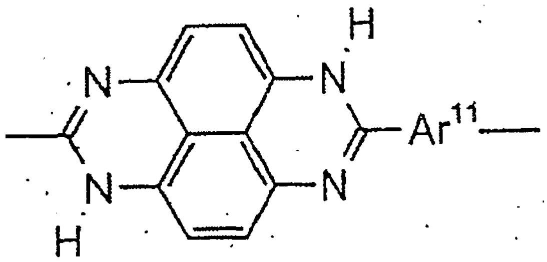

(X)

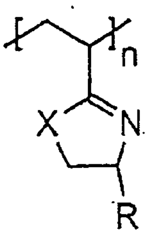

(XI)

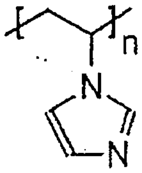

(XII)

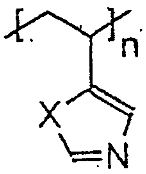

(XIII)

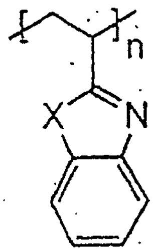

(XIV)

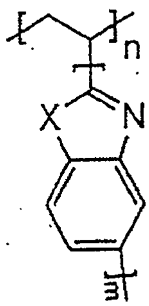

(XV)

where

the radicals Ar are identical or different and are each a tetravalent aromatic or heteroaromatic group which can be monocyclic or polycyclic,

the radicals $Ar^1$ are identical or different and are each a divalent aromatic or heteroaromatic group which can be monocyclic or polycyclic,

the radicals $Ar^2$ are identical or different and are each a divalent or trivalent aromatic or heteroaromatic group which can be monocyclic or polycyclic,

the radicals $Ar^3$ are identical or different and are each a trivalent aromatic or heteroaromatic group which can be monocyclic or polycyclic,
the radicals $Ar^4$ are identical or different and are each a trivalent aromatic or heteroaromatic group which can be monocyclic or polycyclic,
the radicals $Ar^5$ are identical or different and are each a tetravalent aromatic or heteroaromatic group which can be monocyclic or polycyclic,
the radicals $Ar^6$ are identical or different and are each a divalent aromatic or heteroaromatic group which can be monocyclic or polycyclic,
the radicals $Ar^7$ are identical or different and are each a divalent aromatic or heteroaromatic group which can be monocyclic or polycyclic,
the radicals $Ar^8$ are identical or different and are each a trivalent aromatic or heteroaromatic group which can be monocyclic or polycyclic,
the radicals $Ar^9$ are identical or different and are each a divalent or trivalent or tetravalent aromatic or heteroaromatic group which can be monocyclic or polycyclic,
the radicals $Ar^{10}$ are identical or different and are each a divalent or trivalent aromatic or heteroaromatic group which can be monocyclic or polycyclic,
the radicals $Ar^{11}$ are identical or different and are each a divalent aromatic or heteroaromatic group which can be monocyclic or polycyclic,
the radicals X are identical or different and are each oxygen, sulfur or an amino group which bears a hydrogen atom, a group having 1-20 carbon atoms, preferably a branched or unbranched alkyl or alkoxy group, or an aryl group as further radical,
the radicals R are identical or different and are each hydrogen, an alkyl group or an aromatic group and
n, m are each an integer greater than or equal to 10, preferably greater than or equal to 100,

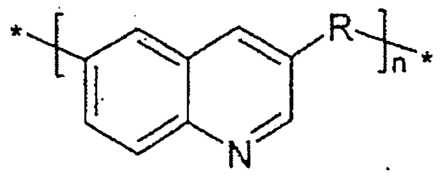

(XX)

where

the radicals R are identical or different and are each an alkyl group or an aromatic group and
n is an integer equal to or greater than 10, preferably equal to or greater than 100,

and has a sulfur content of from 2 to 20% by weight (determined by means of elemental analysis),

**12.** The membrane as claimed in claim 1, **characterized in that** the viscosity is adjusted by addition of phosphoric acid after step A) and before step B).

**13.** The membrane as claimed in claim 1, **characterized in that** the treatment of the membrane in step D) is carried out at temperatures from above 0°C to 150°C, preferably at temperatures in the range from 10°C to 120°C, in particular from room temperature (20°C) to 90°C, in the presence of moisture or water and/or steam.

**14.** The membrane as claimed in claim 1, **characterized in that** an electrode is selected as support in step B) and the treatment according to step D) is such that the membrane formed is no longer self-supporting.

**15.** An electrode provided with a proton-conducting polymer coating which is based on polymers comprising recurring benzimidazole units and is obtainable by a process comprising the steps

A) mixing of one or more aromatic tetraamino compounds with one or more aromatic sulfocarboxylic acids or esters thereof which contain at least two carboxylic acid groups and one sulfonic acid group per carboxylic acid monomer, or mixing of one or more aromatic and/or heteroaromatic sulfonated diaminocarboxylic acids, in a polyphosphoric acid to form a solution and/or dispersion,
B) application of a layer using the mixture from step A) to an electrode,
C) heating of the sheet-like structure/layer obtainable according to step B) under inert gas at temperatures of

up to 350°C, preferably up to 280°C, to form the polyazole polymer,
D) treatment of the membrane formed in step C) in the presence of moisture at temperature and for a time sufficient for the layer to have sufficient strength for use in fuel cells.

**16.** A membrane-electrode unit comprising at least one electrode and at least one membrane as claimed in one or more of claims 1 to 14.

**17.** A membrane-electrode unit comprising at least one electrode as claimed in claim 16 and at least one membrane as claimed in one or more of claims 1 to 14.

**18.** A fuel cell comprising one or more membrane-electrode units as claimed in claim 16 or 17.

**Revendications**

**1.** Membrane polymère conductrice de protons sur base de sulfonates de polymères sur base de polymères contenant des unités benzimidazoliques répétées qui peut être obtenue par un procédé qui comprend les étapes:

A) le mélange d'un ou plusieurs composés tétraaminés aromatiques avec un ou plusieurs acides carboxyliques aromatiques et/ou, leurs esters, qui contiennent au moins deux groupements acide par monomère d'acide carboxylique ou le mélange avec un ou plusieurs acides diaminocarboxyliques aromatiques et/ou hétéroaromatiques, en mélange acide polyphosphorique/mélange de sulfonation avec la formation d'une solution et/ou dispersion
B) l'application d'une couche en utilisant le mélange de l'étape A) sur un support ou sur un électrode
C) le chauffage lissen/couche que l'on peut obtenir à l'étape B) sous gaz inerte et à des températures jusqu'à 350° C, de préférence jusqu'à 280 °C en formant des polyméres de polyazoles
D) le traitement de la couche en polymère obtenue conforme à l'étape C dans la présence de l'humidité à températures et pour une durée de temps jusqu'à ce que la membrane soit autoportante et l'on peut détacher du porteur sans détérioration.

**2.** Membrane selon la revendication 1, **caractérisée en ce que** l'on utilise comme composés tétraaminés aromatiques, le 3,3',4,4'-tétraamino-biphényle, la 2,3,5,6-tétraamynopyridine, le 1,2,4,5-tétraaminobenzène, la 3,3',4,4'-tétraaminodiphénylsulfone, le le 3,3',4,4'-tétraaminodiphényléther, la 3,3',4,4'-tetraaminobenzophénone le 3,3',4,4'-tétraaminodiphénylméthane et le 3,3',4,4'-tétraamino-diphénylediméthylméthane.

**3.** Membrane selon la revendication 1, **caractériséé en ce que** l'on utilise comme acides carboxyliques aromatiques, l'acide isophtalique, l'acide téréphtalique, l'acide phtalique, l'acide 5-hydroxyisophtalique, l'acide 4-hydroxyisophtalique, l'acide 2-hydroxytéréphtalique, l'acide 5-amino-isophtalique, l'acide 5-N,N-diméthylaminoisophtalique l'acide 5-N,N-diéthylaminoisophtalique, l'acide 2,5-dihydroxytéréphtalique, l'acide 2,5-dihydroxy-isophtalique, l'acide 2,3-dihydroxyisophtalique, l'acide 2,3-dihydroxyphtalique, l'acide 2,4-dihydroxyphtalique, l'acide 3,4-dyhydroxyphtalique, l'acide 3-fluorophtalique, l'acide 5-fluoroisophtalique, l'acide 2-fluorotéréphtalique, l'acide tétrafluorophtalique, l'acide tétrafluoroisophtalique, l'acide tétrafluoro-téréphtalique, l'acide 1,4-naphtalènedicarboxylique, l'acide 1,5-naphtalènedicarboxylique, l'acide 2,6-naphtalènedicarboxylique, l'acide 2,7-naphtalènedicarboxylique, l'acide diphénique, l'acide 1,8-dihydroxynaphtalène-3,6-dicarboxylique, l'acide diphényléther-4,4'-dicarboxylique, l'acide benzophénone-4,4'-dicarboxylique, l'acide diphénylsulfone-4,4'-dicarboxylique, l'acide biphényle-4,4'-dicarboxylique, l'acide 4-trifluorométhylphtalique, le 2,2-bis (4-carboxyphényl)hexafluoropropane, l'acide 4,4'-stilbène-dicarboxylique, l'acide 4-carboxycinnamique ou leurs esters d'alkyle en $C_1$ à $C_{20}$, ou leurs esters d'aryle en $C_5$ à $C_{12}$, ou leurs anhydrides d'acide ou leurs chlorures d'acide.

**4.** Membrane selon la revendication 1, **caractérisée en ce que** l'on utilise comme acide carboxylique aromatique des acides tricarboxyliques, des acides tetracarboxyliques et/ou leurs esters d'alkyle en $C_1$ à $C_{20}$, ou leurs esters d'aryle en $C_5$ à $C_{12}$ ou leurs anhydrides d'acide ou leurs chlorures d'acide de préférence 1,3,5-benzéne-tricarboxylique (acide trimérique), l'acide 1,2,4-benzéne-tricarboxylique (acide trimellitique), l'acide (2 carboxyphényl) iminodiacetique, l'acide 3,5,3'-biphényltricarboxylique, l'acide 3,5,4'-biphényltricarboxylique, 2,4,6-pyridinetricarboxylique.

**5.** Membrane selon la revendication 1, **caractérisée en ce que** l'on utilise comme acide carboxylique aromatique des acides tetracarboxyliques, ou leurs esters d'alkyle en $C_1$ à $C_{20}$, ou leurs esters d'aryle en $C_5$ à $C_{12}$ ou leurs anhydrides d'acide ou leurs chlorures d'acide de préférence les acides benzène-1,2,4,5-tétracarboxyliques, les acides naphtalène-1,4,5,8-tétracarboxyliques, les acides 3,5,3',5'-biphényltétracarboxyliques, l'acide benzophénonetétracarboxylique, l'acide 3,3',4,4'-biphényltétracarboxyliques, l'acide 2,2',3,3'-biphényltétracarboxylique, l'acide 1,2,5,6-naphtalènetétracarboxylique, l'acide 1,4,5,8-naphtalènetétracarboxylique.

**6.** Membrane selon la revendication 4, **caractérisée en ce que** la teneur en acide tricarboxylique et/ou en acides tétracarboxyliques (par rapport à l'acide dicarboxylique) se situe entre 0 et 30 % en mole, de préférence entre 0,1 et 20% en mole, en particulier entre 0,5 et 10 % en mole.

**7.** Membrane selon la revendication 1, **caractérisée en ce que** l'on utilise comme acides carboxyliques hétéroaromatiques, des acides dicarboxyliques hétéroaromatiques, des acides tricarboxyliques hétéroaromatiques et/ou des acides tétracarboxyliques hétéroatomiques, qui contiennent au moins un atome d'azote, d'oxygène, de soufre ou de phosphore dans les aromatiques de préférence l'acide pyridine-2,5-dicarboxylique, de l'acide pyridine-3,5-dicarboxylique, de l'acide pyridine-2,6-dicarboxylique, de l'acide pyridine-2,4-dicarboxylique, de l'acide 4-phényl-2,5-pyridinedicarboxylique, de l'acide 3,5-pyrazoledicarboxylique, de l'acide 2,6-pyridinedicarboxylique, de l'acide pyrazinedicarboxylique, de l'acide 2,4,6-pyridinedicarboxylique, de l'acide benzimidamol-5,6-dicarboxylique ainsi que leurs esters d'alkyle en $C_1$ à $C_{20}$, ou leurs esters d'aryle en $C_5$ à $C_{12}$, leurs anhydrides d'acide ou leurs chlorures d'acide.

**8.** Membrane selon la revendication 1, **caractérisée en ce que** l'agent de sulfonation utilisé à l'étape A) est choisi du groupement i) acide sulfurique concentré* (>95%), ii) acide chlorosulfonique, iii) un complexe de $SO_3$ avec une base Lewis ou d'autres composantes organiques, iv) un acyl ou alkylsulfate, v) un acide sulfonique organique ou vi) des mélanges de i à v.

**9.** Membrane selon la revendication 1, **caractérisée en ce qu'**on choisit comme acide diaminocarboxylique aromatique et hétéroaromatique l'acide diaminobenzoïque.

**10.** Membrane selon la revendication 1, **caractérisée en ce que** dans l'étape A) on choisit un acide phosphorique avec une teneur de $P_2O_5$ (acidimetrique) calculé de minimum 83%.

**11.** Membrane selon la revendication 1, **caractérisée en ce que** dans l'étape C) un polymère sur base de polymères avec des unités benzimidazoles répétées avec la formule générale (I) et/ou (II) et/ou (III) et/ou (IV) et/ou (V) et/ou (VI) et/ou (VII) et/ou (VIII) et/ou (IX) et/ou (X) et/ou (XI) et/ou (XII) et/ou (XIII) et/ou (XIV) et/ou (XV) et/ou (XVI) et/ou (XVII) et/ou (XVIII) et/ou (XIX) et/ou (XX) et/ou (XXI) et/ou (XXII).

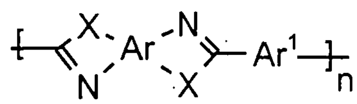

(I)

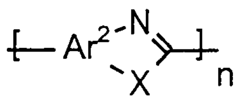

(II)

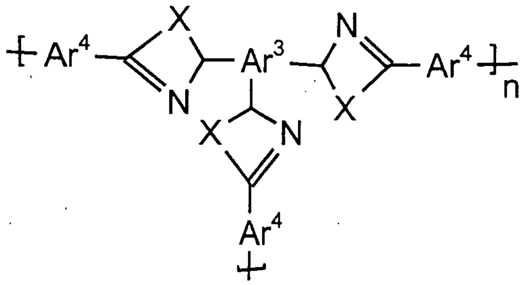

(III)

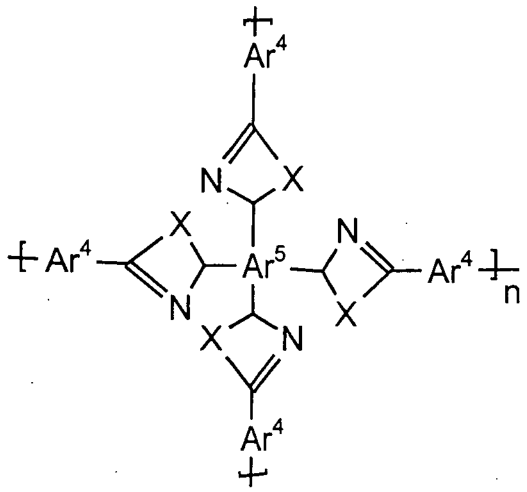

(IV)

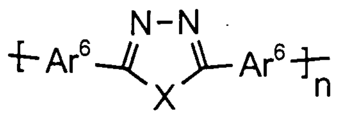

(V)

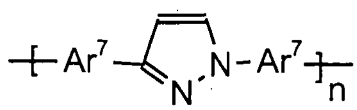

(VI)

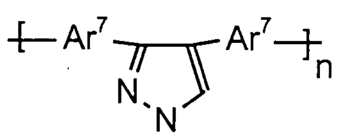

(VII)

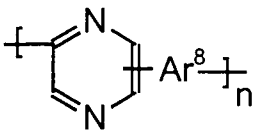

(VIII)

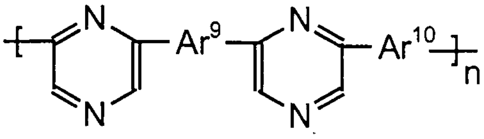

(IX)

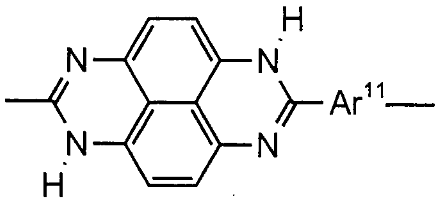

(X)

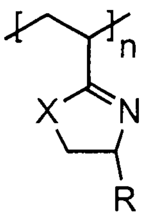

(XI)

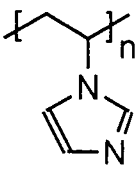

(XII)

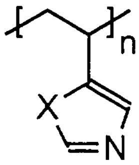

(XIII)

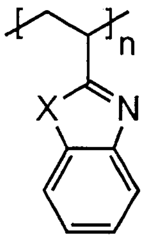

(XIV)

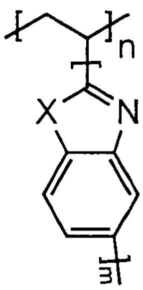

(XV)

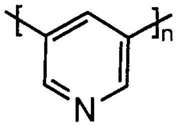

(XVI)

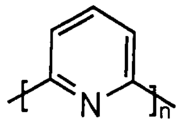

(XVII)

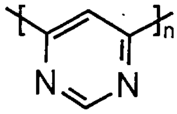

(XVIII)

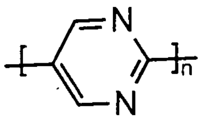

(XIX)

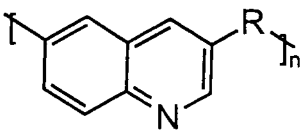

(XX)

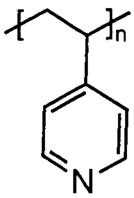

(XXI)

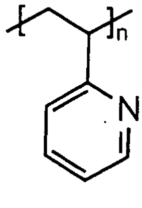

(XXII)

où

Ar sont les mêmes ou différents aussi pour un groupement aromatique ou hétéroaromatique à quatre liaisons, qui peut être avec un ou plusieurs noyaux
$Ar^1$ sont les mêmes ou différents aussi pour un groupement aromatique ou hétéroaromatique a deux liaisons, qui peut être avec un ou plusieurs noyaux
$Ar^2$ sont les mêmes ou différents aussi pour un groupement aromatique ou hétéroaromatique à deux ou trois liaisons, qui peut être avec un ou plusieurs noyaux
$Ar^3$ sont les mêmes ou différents aussi pour un groupement aromatique ou hétéroaromatique à trois liaisons, qui peut être avec un ou plusieurs noyaux
$Ar^4$ sont les mêmes ou différents aussi pour un groupement aromatique ou hétéroaromatique à trois liaisons, qui peut être avec un ou plusieurs noyaux
$Ar^5$ sont les mêmes ou différents aussi pour un groupement aromatique ou hétéroaromatique à quatre liaisons, qui peut être avec un ou plusieurs noyaux
$Ar^6$ sont les mêmes ou différents aussi pour un groupement aromatique ou hétéroaromatique à deux liaisons, qui peut être avec un ou plusieurs noyaux
$Ar^7$ sont les mêmes ou différents aussi pour un groupement aromatique ou hétéroaromatique à deux liaisons, qui peut être avec un ou plusieurs noyaux
$Ar^8$ sont les mêmes ou différents aussi pour un groupement aromatique ou hétéroaromatique à trois liaisons, qui peut être avec un ou plusieurs noyaux.
$Ar^9$ sont les mêmes ou différents aussi pour un groupement aromatique ou hétéroaromatique à deux, trois ou quatre liaisons, qui peut être avec un ou plusieurs noyaux
$Ar^{10}$ sont les mêmes ou différents aussi pour un groupement aromatique ou hétéroaromatique à deux ou trois liaisons, qui peut être avec un ou plusieurs noyaux
$Ar^{11}$ sont les mêmes ou différents aussi pour un groupement aromatique ou hétéroaromatique a deux liaisons, qui peut être avec un ou plusieurs noyaux.
X le même ou différent est aussi pour hydrogène, soufre, ou un groupement amino, qui porte comme reste un atome d'hydrogène, un groupement présentant 1-20 atomes de carbone, de préférence un groupement ramifié ou non ramifié d'alkyle ou alkoxy, ou un groupement d'aryle.
R le même ou différent pour hydrogène, un groupement d'alkyle et un groupement aromatique et
n, m est un nombre entier plus ou égal avec 10, de préférence plus ou égal avec 100

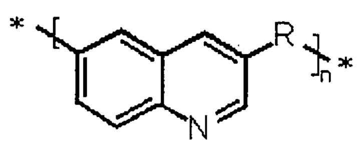 (XX)

ou

R le même ou différent pour un groupement d'alkyle et un groupement aromatique et
n est un nombre entier plus ou égal avec 10, de préférence plus ou égal avec 100 si

et qui presente une teneur de soufre de 2 a 20 % en poids.

**12.** Membrane selon la revendication 1, **caractérisée en ce que** dans l'étape A) et avant de l'étape B) se règle la viscosité par addition de l'acide phosphorique.

**13.** Membrane selon la revendication 1, **caractérisée en ce que** le traitement de la membrane dans l'étape D) a lieu aux températures au-dessus de 0 °C et 150 °C, préférablement aux températures entre 10 °C et 120 °C, spécialement entre la température ambiante (20 °C) et 90 °C, dans la présence de l'humidité, respectivement de l'eau et/ou des vapeurs d'eau.

**14.** Membrane selon la revendication 1, **caractérisée en ce que** dans l'étape B) on choisit comme porteur une électrode et le traitement est présenté conforme à l'étape D), ainsi que la membrane formée n'est plus autoportante.

**15.** Electrode couverte avec une couche de polymère conductrice de protons sur base de polymères contenant des unités benzimidazoles répétées qui peut être obtenue par un procédé qui contient les suivantes étapes:

A) Le mélangeage d'une ou plusieurs combinaisons aromatiques tétraamino avec l'un ou plusieurs acides sulfoncarboxyliques respectivement de leurs esters, qui contiennent au moins deux groupements acides et un groupement sulfonique acide par monomère carboxylique, ou le mélangeage de l'un ou plusieurs sulfonates d'acides diaminocarboxyliques aromatiques et/ou hétéroaromatiques dans un acide polyphosphorique avec la formation d'une solution et/ou dispersion

B) Depôt sur l'électrode d'une couche par l'utilisation du mélange conforme à l'étape A)

C) Chauffage de la formation lisse/couche obtenue conform à l'étape B) en gaz inerte à températures de jusqu'à 350 °C, de préférence jusqu'à 280 °C avec la formation de polymères de polyazoles

D) Traitement de la membrane formée dans l'étape C) dans la présence de l'humidité à températures, pour une durée suffisante pour que la couche présente une résistance suffisante pour l'utilisation dans les cellules de combustion.

**16.** Unité de membrane(s)-électrode(s) contenant au moins une électrode et au moins une membrane selon une ou plusieurs des revendications 1 à 14.

**17.** Unité de membrane(e)-électrode(e) contenant au moins une électrode selon la revendication 16, et au moins une membrane selon une ou plusieurs des revendications 1 à 14.

**18.** Pile à combustible contenant une ou plusieurs unités de membrane(s)-électrode(s) selon la revendication 16 ou 17.